# EUROPEAN PATENT SPECIFICATION

(11) **EP 3 042 082 B1**
(45) Date of publication and mention of the grant of the patent: **09.10.2019**
(21) Application number: 14752344.3
(22) Date of filing: 18.08.2014
(51) Int. Cl.: F04D 7/04, F04D 29/22, B02C 18/00, B23Q 11/00

(54) **PUMP WITH CUTTING WHEEL AND PRE-CUTTER**
PUMPE MIT SCHNEIDRAD UND VORSCHNEIDER
POMPE AVEC DÉSINTÉGRATEUR ET PRÉ-DÉSINTÉGRATEUR

(30) Priority: 04.09.2013 DE 202013103974 U
(43) Date of publication of application: 13.07.2016
(73) Proprietor: Brinkmann Pumpen K.H. Brinkmann GmbH & Co. KG, 58791 Werdohl (DE)
(72) Inventor: WENDEROTT, Dirk, 44577 Castrop-Rauxel (DE)
(74) Representative: Ter Meer Steinmeister & Partner
(86) International application number: PCT/EP2014/067563
(87) International publication number: WO 2015/032609

(56) References cited:
- JP-A- 2007 092 741
- JP-A- 2012 233 457
- UA-C2- 79 858
- US-A1- 2010 003 124
- US-A1- 2013 121 811

## Description

The invention relates to a pump having a cutting wheel and a pre-cutter for cutting chippings that are contained in the medium pumped by the pump, the pre-cutter being driven by a shaft portion that projects axially from the cutting wheel and having a plurality of wings that extend radially from the shaft portion and have, when seen in a projection onto the plane orthogonal to the axis of the shaft portion, a curved shape such that their edge forming the leading edge in the direction of rotation is curved convexly and permits the chippings to slide radially outwardly along that edge, the pre-cutter being surrounded by a crest of anvil blocks at which the free ends of the wings move past in a little distance when the pre-cutter rotates.

A pump of this type, corresponding to the preamble of claim 1, is known from DE 10 2008 031 842 B3 and is used for example in machine tools for circulating lubricating coolant emulsions that are contaminated with metal chippings. This pump is a centrifugal pump that has, in addition to a radial impeller, an axial impeller disposed upstream of the radial impeller, said axial impeller being configured as a cutting impeller and having, at its upstream end, cutting edges that cooperate with stationary counter blades arranged radially in a suction passage, so that chippings and other contaminants that have been sucked in are cut-off and chopped. The pre-cutter serves for chopping coarse contaminants before they are sucked-in by the axial impeller and are then chopped further. In this pump, the anvil blocks are formed by the intake port of the pump having, at the level of the pre-cutter, a non-circular, approximately polygonal cross-section.

US 2013 121811 A1 also discloses a pump according to the preamble of claim 1.

A similar pump is shown in JP 2012 233457 A.

UA 79 858 C2 shows a pre-cutter which is has stationary counter-blades and has wings with curved and toothed leading edges.

It is an object of the invention to improve the chopping efficiency of the pre-cutter. According to the invention, this object is achieved by the feature that each wing has at its free end an outwardly angled catch that obstructs the movement of chippings that slide along the convexly curved edge of the wing.

The catches have the effect that the chippings that impinge on the convexly curved edge of the wing and slide radially outwardly along that edge may not slip off the wing unob-structedly but are held back by the catch and are consequently entrained with the rotation of the pre-cutter. This increases the likelihood that the chippings are suspended on the catch until this catch moves past the next anvil block. The chippings will then impinge onto the anvil block and will be crashed or chopped due the relative movement of the wing and the anvil block. In this way, the efficiency of the pre-cutter can be improved significantly.

Useful embodiments and further developments of the invention are indicated in the dependent claims.

In a preferred embodiment, the catch forms at the free end of the wing a notch or step with an abutment surface that extends approximately at right angles to the edge of the wing and at which, consequently, the chippings that slide along that edge may easily be caught. The catches are preferably formed in a region of an embossment at the end of the wing.

The anvil blocks are preferably formed by counter-blades that are held stationarily in a blade carrier that surrounds the pre-cutter at least on a part of its periphery. In a useful embodiment, each counter-blade forms a straight rupture edge that is directed radially towards the pre-cutter and extend straight in parallel to the axis of rotation of the pre-cutter. the counter-blades can preferably be exchanged individually.

An embodiment example will now be described in conjunction with the drawings, wherein:
- Fig. 1: is an axial cross-sectional view of an intake part of a pump according to the invention;
- Fig. 2: is a perspective view of the intake part from below;
- Fig. 3: an axial section of a pre-chopper; and
- Fig. 4: the pre-chopper in a view from below.

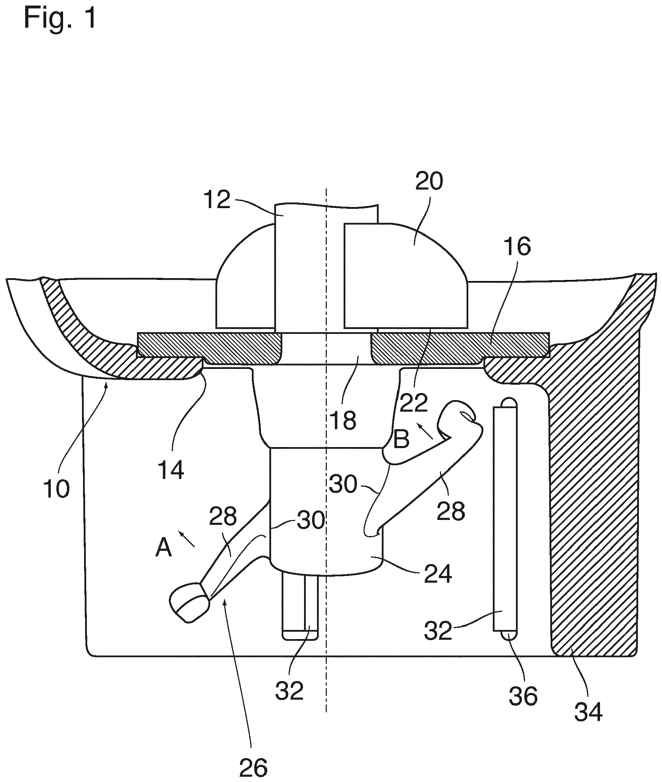

The pump, a part of which has been shown in an axial section in Fig. 1, comprises a casing 10 which rotatably supports a shaft 12 and forms a suction opening 14 that is arranged coaxially with the shaft. In another part, which has not been shown and is situated more upwardly, the casing 10 forms a pump chamber accommodating a rotating impeller, e.g. a radial impeller that is keyed onto the shaft 12.

It shall be assumed in the following that the pump has been installed in a vertical orientation in a collecting vessel (not shown) for a lubricating coolant, so that its suction opening 14 faces the bottom of the vessel and is immersed into the liquid contained in this vessel. Thus, the liquid will be sucked-in by the pump upwardly through the suction opening 14.

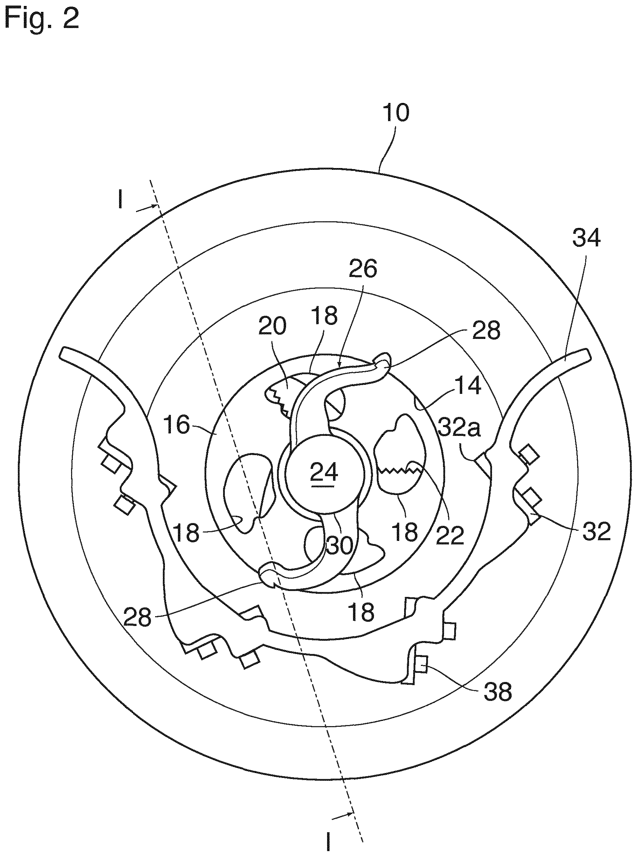

Inserted in the suction opening 14, there is cutting plate 16 which blocks a larger part of the suction opening and leaves only four smaller passages 18. In the sectional view in Fig. 1, the section plane, indicated by a line I-I in Fig. 2, extends offset from the centre of the suction opening, so that one of the passages 18 is cut through.

A cutting wheel 20 is mounted on the shaft 12 above the cutting plate 16, and blades of this cutting wheel are formed at their lower end with cutting edges 22 which, when the cutting wheel 20 rotates, move closely above and across the top ends of the passages 18. In Fig. 2, the toothed cutting edges 22 of the cutting wheel can be seen through the passages 18. The blades of the cutting wheel 20 (three blades arranged with angular spacings of 120° in example shown in Fig. 2) may be curved in the direction of rotation, so that the cutting wheel 20 acts as a radial impeller. Optionally, however, they might also have a helical shape so that the cutting wheel would act as an axial impeller.

When, as is frequently the case for machine tools, the lubricating coolant that is pumped back from the tool of the machine into the collection vessel contains chippings of the work piece that has been processed, e.g. steel chippings, these will be sucked-in through the suction opening 14 together with the liquid, and when they pass through the passages 18 they will be caught by the cutting edges 22 of the cutting wheel and will be cut at the edge of the passages 18. In this way, the chippings can be prevented from becoming entangled and clogging or blocking the pump. In addition, the chippings will be cut to a size in which they can more easily be entrained in the flow of the coolant. This reduces the risk of clogging downstream pipings.

The shaft 12 of the pump passes through a central bore of the cutting plate 16 and forms, below this cutting plate, a shaft portion 24 that carries a pre-cutter 26 for pre-cutting the chippings. As shown in Fig. 2, the pre-cutter 26 has two wings 28 which, when seen in a projection onto the plane orthogonal to the axis of the shaft 12 (the plane of the drawing in Fig. 2), are so arranged and shaped that they are symmetric under a 180° rotation about the axis of the shaft 12. The wings 28 have a curved shape and extend from base portions 30, with which they are attached to the shaft portion 24, at first radially outwardly, but are then curved into the circumferential direction, so that their free ends are trailing in the direction of rotation (counter-clockwise in Fig. 2).

While the wings 28 are symmetric in the projection shown in Fig. 2, it can be seen in Fig. 1 that they differ from one another in their axial arrangement on the shaft portion 24. In particular, the base portions 30 of the two wings are axially offset relative to one another. In case of the left wing in Fig. 1, the base portion 30 is closer to the distal end of the shaft portion 24, i.e. in a lower position, whereas in case of the right wing in Fig. 1, it is disposed in a higher position, closer to the cutting plate 16.

Moreover, the left wing 28 in Fig. 1 slants downwardly towards its free end, so that it forms an obtuse angle of approximately 135° with the axis of the shaft 12, whereas the other wing slants upwardly and, consequently, forms an acute angle of approximately 45° with the axis of the shaft 12.

Furthermore, the wings 28, in particular their intermediate portions extending between the base portion 30 and the free end, are angled like propeller wings, so that the wings, together, create an upwardly directed suction that will cause the liquid medium to be displaced towards the suction opening 14.

As the left wing 28 in Fig. 1 is closer to the bottom of the vessel, it is particularly suited for lifting relatively heavy chippings that rest on the bottom of the vessel and to convey them towards the suction opening 14. Due to the slanting posture of this wing, it imparts to the liquid medium and to the chippings a momentum that has approximately the direction indicated by an arrow A in Fig. 1 and, consequently, has a component directed radially outwardly. However, before the chippings can move in radial direction too far away from the shaft portion 24, they enter into a region where they are affected by the other wing 28 (the right wing in Fig. 1) which imparts them a momentum in the direction of the arrow B and, consequently, drives them back in the direction towards the axis of the shaft portion 24 and hence in the direction of the passages 18 of the cutting plate 16. In this way, the two wings 28 operate, so to say, in work-sharing fashion, with one wing having the task to lift heavy chippings from the bottom of the vessel and the other wing having the task of conveying these chippings further towards the suction opening 14 where the chippings will then be cut by means of the cutting wheel 20 in the passages 18.

However, thanks to the curved shape of the wings 28 and thanks to the slanting postures of these wings, the chippings are not moved directly from the bottom of the vessel to the passages 18, but instead that are at first driven radially outwardly at the curved leading edges of the wings 28, so that they enter into the range of action of stationary counter blades 32 that are held in a blade carrier 34 and extend in parallel with the axis of the shaft 12 and the shaft portion 24.

In the example shown, the counter-blades 32 are formed by rectangular plates made of a hart material (e.g. duplex cast steel, hard metal, hardened tool steel) each of which forms a rupture edge directed towards the pre-cutter 26. As the outer peripheral portions of the wings 28 move past the counter blades 32 in only a little distance, the chippings entrained therewith, especially long chippings that tend to become entangled, are fragmented at the counter blades 32 so that they may smoothly be moved on towards the passages 18.

In the example shown, the blade carrier 34 is shaped as a vertical wall with a U-shaped cross-section which flares outwardly in funnel-shape at the open side of the U (upwards in Fig. 2). The counter-blades 32 extend through openings 36 (Fig. 1) of the blade carrier 34 and are mounted detachably by means of bolts 38 (Fig. 2), so that they may be replaced when the rupture edges are worn-out.

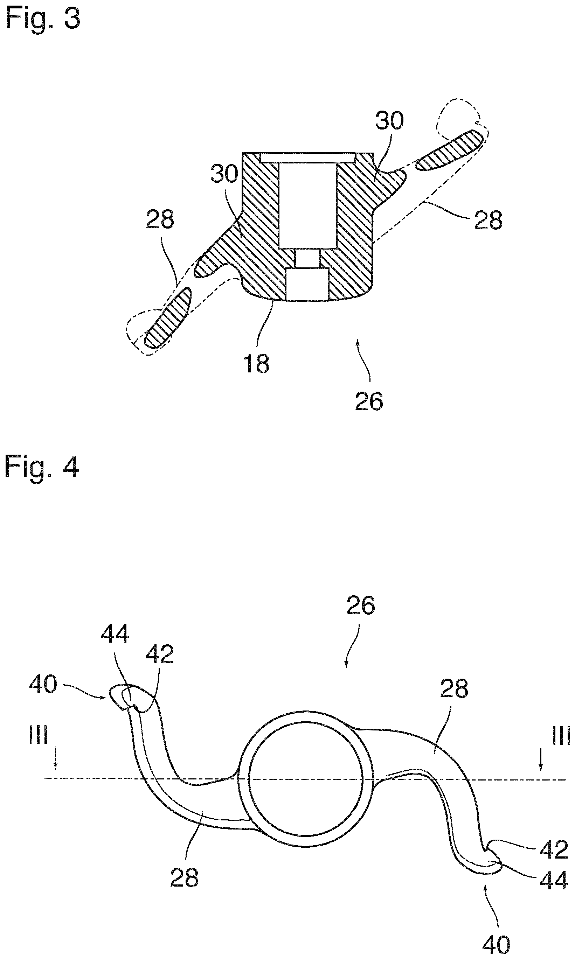

The pre-cutter 26 has been shown separately in Figs. 3 and 4. Fig. 3 shows an axial section along the line III-III in Fig. 4 and clearly shows the axial offset between the base portions 30 of the two wings 28.

Further, it can be seen especially in Fig. 4 that each wing 28 has a hook-shaped, outwardly angled catch 40 at its free end. In this example, the catch 40 is shaped as a step that forms an abutment surface 42 extending approximately orthogonally to the edge of the wing 28 and forming the start of an embossment 44 at the free end of the wing. When the chippings impinge onto the convexly curved front edge of the wing 28 and slide radially outwards along the wing, the catch 40 obstructs this slide movement to some extent, so that the chippings are somewhat held back in their position at the outer end of the wing, until this end of the wing moves past the rupture edge of one of the counter blades 32 and the chippings that are "suspended" at the catch are fragmented. In this way, a particularly efficient pre-chopping of the chippings can be achieved.

## Claims

1. A pump having a cutting wheel (20) and a pre-cutter (26) for cutting chippings that are contained in the medium pumped by the pump, the pre-cutter being driven by a shaft portion (24) that projects axially from the cutting wheel and having a plurality of wings (28) that extend radially from the shaft portion (24) and have, when seen in a projection onto the plane orthogonal to the axis of the shaft portion (24), a curved shape such that their edge forming the leading edge in the direction of rotation is curved convexly and permits the chippings to slide radially outwardly along that edge, the pre-cutter being surrounded by a crest of anvil blocks (32) at which the free ends of the wings (28) move past in a little distance when the pre-cutter rotates, **characterized in that** each wing (28) has at its free end an outwardly angled catch (40) that obstructs the movement of chippings that slide along the convexly curved edge of the wing (28).

2. The pump according to claim 1, wherein the catch is formed in a region of an embossment (44) at the free end of the wing (28).

3. The pump according to claim 1 or 2, wherein the catch (40) forms an abutment surface (42) that extends approximately orthogonally to the edge of the wing (28).

4. The pump according to any of the preceding claims, wherein base portions (30) with which the wings (28) adjoin the periphery of the shaft portion (24) are offset relative to one another in axial direction of the shaft portion.

5. The pump according to any of the preceding claims, wherein the wings (28) form different angles with the axis of the shaft portion (24).

6. The pump according to any of the preceding claims, wherein the pre-cutter (26) has a number N of wings (28) that are arranged and shaped such that, when seen in a projection onto a plane orthogonal to the axis of the shaft portion (24), they are symmetric under a rotation of 360/N° about the axis of the shaft portion (24).

7. The pump according to claims 4 and 6 wherein N is two.

8. The pump according to the claims 4, 5 and 7, wherein the wing (28) the base portion (30) of which is closer to the distal end of the shaft portion (24) forms an obtuse angle with the axis of the shaft portion, so that the end of this wing points axially away from the cutting wheel (20), whereas the other wing (28) forms an acute angle with the shaft portion (24).

9. The pump according to any of the preceding claims, wherein the anvil blocks are configured as counter-blades (32) arranged at a blade carrier (34) that surrounds the pre-cutter (26) at least on a part of its periphery.

10. The pump according to any of the preceding claims, wherein the counter-blades (32) are held exchangeably at the blade carrier (34).

11. The pump according to any of the preceding claims, wherein the blade carrier (34) is configured as a wall with a U-shaped cross-section that is open to one side of the pre-cutter (26).

12. The pump according to any of the preceding claims, wherein each of the counter-blades (32) forms a rupture edge (32a) that extends in parallel to the axis of the shaft portion (24).

## Patentansprüche

1. Pumpe mit einem Schneidrad (20) und einem Vorzerkleinerer (26) zum Zerkleinern von Spänen, die in dem von der Pumpe gepumpten Medium enthalten sind, wobei der Vorzerkleinerer durch einen axial vom Schneidrad (20) ausgehenden Wellenabschnitt (24) angetrieben ist und mehrere radial von dem Wellenabschnitt (24) ausgehende Flügel (28) aufweist, die in der Projektion auf die zur Achse des Wellenabschnitts (24) senkrechte Ebene eine derart geschwungene Form haben, dass ihre in Drehrichtung vorauslaufende Kante konvex gekrümmt ist und es den Spänen erlaubt, entlang dieser Kant radial auswärts zu gleiten, und wobei der Vorzerkleinerer (26) von einem Kranz von stationären Gegenhaltern (32) umgeben ist, an denen sich die freien Enden der Flügel (28) bei der Drehung des Vorzerkleinerers in geringem Abstand vorbeibewegen, **dadurch gekennzeichnet, dass** jeder Flügel (28) am freien Ende einen nach außen gekröpften Mitnehmer (40) aufweist, der der Bewegung der Späne, die an der konvex gekrümmten Kante des Flügels (28) abgleiten, einen Widerstand entgegensetzt.

2. Pumpe nach Anspruch 1, bei der der Mitnehmer im Bereich einer Verdickung (44) am freien Ende des Flügels (28) gebildet ist.

3. Pumpe nach Anspruch 1 oder 2, bei der der Mitnehmer (40) eine Anschlagfläche (42) bildet, die sich etwa rechtwinklig zu der Kante des Flügels (28) erstreckt.

4. Pumpe nach einem der vorstehenden Ansprüche, bei der Fußbereiche (30), mit denen die Flügel (28) an den Umfang des Wellenabschnitts (24) anschließen, in Axialrichtung des Wellenabschnitts gegeneinander versetzt sind.

5. Pumpe nach einem der vorstehenden Ansprüche, bei der die Flügel (28) unterschiedliche Winkel mit der Achse des Wellenabschnitts (24) einschließen.

6. Pumpe nach einem der vorstehenden Ansprüche, bei der der Vorzerkleinerer (26) eine Anzahl N von Flügeln (28) aufweist, die so angeordnet und geformt sind, dass sie in der Projektion auf eine zur Achse des Wellenabschnitts (24) senkrechte Ebene unter einer Drehung von 360/N ° um die Achse des Wellenabschnitts (24) symmetrisch sind.

7. Pumpe nach den Ansprüchen 4 und 6, bei der die Anzahl N gleich zwei ist.

8. Pumpe nach den Ansprüchen 4, 5 und 7, bei der der Flügel (28), dessen Fußbereich (30) dem freien Ende des Wellenabschnitts (24) näher liegt, mit der Achse des Wellenabschnitts einen stumpfen Winkel bildet, so dass das Ende dieses Flügels axial von dem Schneidrad (20) weg weist, während der andere Flügel (28) mit der Achse des Wellenabschnitts (24) einen spitzen Winkel bildet.

9. Pumpe nach einem der vorstehenden Ansprüche, bei der die Gegenhalter als Gegenmesser (32) ausgebildet sind, die an einem den Vorzerkleinerer (26) zumindest auf einem Teil seines Umfangs umgebenden Messerträger (34) angeordnet sind.

10. Pumpe nach Anspruch 9, bei der die Gegenmesser (32) auswechselbar dem Messerträger (34) gehalten sind.

11. Pumpe nach Anspruch 9 oder 10, bei der der Messerträger (34) die Form einer im Querschnitt U-förmigen Wand hat und zu einer Seite des Vorzerkleinerers (26) hin offen ist.

12. Pumpe nach einem der Ansprüche 9 bis 11, bei der die Gegenmesser (32) jeweils eine parallel zur Achse des Wellenabschnitts (24) verlaufende Schlagkante (32a) bilden.

## Revendications

1. Pompe comportant une roue de coupe (20) et un prédécoupeur (26) pour couper des débris qui sont contenus dans le milieu pompé par la pompe, le prédécoupeur étant entraîné par une partie d'arbre (24) qui fait saillie axialement à partir de la roue de coupe, et comportant une pluralité d'ailes (28) qui s'étendent radialement à partir de la partie d'arbre (24), et qui ont, vues en projection sur le plan orthogonal à l'axe de la partie d'arbre (24), une forme incurvée de telle sorte que leur bord formant le bord avant dans la direction de rotation soit incurvé de façon convexe et permette aux débris de glisser radialement vers l'extérieur le long de ce bord, le prédécoupeur étant entouré par une crête de blocs d'enclume (32) devant laquelle passent les extrémités libres des ailes (28) sur une petite distance lorsque le prédécoupeur tourne, **caractérisée en ce que** chaque aile (28) comporte, à son extrémité libre, un taquet en angle vers l'extérieur (40) qui obstrue le déplacement de débris qui glissent le long du bord incurvé de façon convexe de l'aile (28).

2. Pompe selon la revendication 1, dans laquelle le taquet est formé dans une région d'un relief (44) à l'extrémité libre de l'aile (28).

3. Pompe selon la revendication 1 ou 2, dans laquelle le taquet (40) forme une surface de butée (42) qui s'étend de façon approximativement orthogonale par rapport au bord de l'aile (28).

4. Pompe selon l'une quelconque des revendications précédentes, dans laquelle des parties de base (30) par lesquelles les ailes (28) rejoignent la périphérie de la partie d'arbre (24) sont décalées entre elles dans la direction axiale de la partie d'arbre.

5. Pompe selon l'une quelconque des revendications précédentes, dans laquelle les ailes (28) forment des angles différents avec l'axe de la partie d'arbre (24).

6. Pompe selon l'une quelconque des revendications précédentes, dans laquelle le prédécoupeur (26) comporte un nombre N d'ailes (28) qui sont agencées et formées de telle sorte que, vues en projection sur un plan orthogonal à l'axe de la partie d'arbre (24), elles soient symétriques sous une rotation de 360/N° autour de l'axe de la partie d'arbre (24).

7. Pompe selon les revendications 4 et 6, dans laquelle N est de deux.

8. Pompe selon les revendications 4, 5 et 7, dans laquelle l'aile (28) dont la partie de base (30) est plus proche de l'extrémité distale de la partie d'arbre (24) forme un angle obtus avec l'axe de la partie d'arbre, de telle sorte que l'extrémité de cette aile pointe axialement de façon à s'éloigner de la roue de coupe (20), tandis que l'autre aile (28) forme un angle aigu avec la partie d'arbre (24).

9. Pompe selon l'une quelconque des revendications précédentes, dans laquelle les blocs d'enclume sont configurés sous la forme de contre-lames (32) disposées sur un support de lames (34) qui entoure le prédécoupeur (26) au moins sur une partie de sa périphérie.

10. Pompe selon l'une quelconque des revendications précédentes, dans laquelle les contre-lames (32) sont maintenues de façon échangeable sur le support de lames (34) .

11. Pompe selon l'une quelconque des revendications précédentes, dans laquelle le support de lames (34) est configuré sous la forme d'une paroi avec une section transversale en forme de U qui est ouverte vers un côté du prédécoupeur (26).

12. Pompe selon l'une quelconque des revendications précédentes, dans laquelle chacune des contre-lames (32) forme un bord de rupture (32a) qui s'étend parallèlement à l'axe de la partie d'arbre (24).
